# EUROPEAN PATENT SPECIFICATION

(11) **EP 2 602 442 B1**
(45) Date of publication and mention of the grant of the patent: **13.08.2014**
(21) Application number: 11192026.0
(22) Date of filing: 05.12.2011
(51) Int. Cl.: F01D 25/34, F02C 7/32, F16D 11/14

(54) **Cranking pad interlock**
Verriegelung für Antriebskurbel
Verrouillage de manivelle d'antrainement

(43) Date of publication of application: 12.06.2013
(73) Proprietor: Hamilton Sundstrand Corporation, Windsor Locks, CT 06096-1010 (US)
(72) Inventor: Short, Keith E., Rockford, IL Illinois 61111 (US); Brown, Jeff A., Cherry Valley, IL Illinois 61016 (US)
(74) Representative: Tomlinson, Kerry John

(56) References cited:
- EP-A1- 0 754 838
- US-A- 4 437 809
- US-B1- 6 382 909

## Description

### BACKGROUND OF THE INVENTION

The subject matter disclosed herein relates to turbomachines. More specifically, means for manually rotating an interior shaft of a turbomachine when the turbomachine is not operating.

When performing maintenance and/or inspection (such as boroscope inspection) of a turbomachine, for example, a gas turbine engine for an aircraft, it is often desired to rotate the shaft of the gas turbine to provide access to interior components of the core of the gas turbine. This is typically accomplished by turning the accessory gearbox which is connected to the core. To turn the accessory gearbox, a simple cover is removed from the gearbox and a cranking tool is inserted into a cranking pad of the gearbox and the cranking tool is used to rotate the gearbox which in turn rotates the shaft of the gas turbine. Once the cranking operation is completed, the tool is removed and the cover must be replaced to seal the gearbox and gas turbine from oil leakage. If the cover is not replaced, the oil leakage can result in damage to and/or failure of the gas turbine.

US 6382909 discloses the features of the pre-characterising portion of claim 1.

### BRIEF DESCRIPTION OF THE INVENTION

In one aspect the invention provides a gearbox of a turbomachine comprising a gearbox housing, a gearbox drivetrain and a cranking pad assembly, the cranking pad assembly comprising: a cranking pad shaft rotatably secured in the gearbox housing and engageable with the gearbox drivetrain when urged inwardly into the gearbox housing, the cranking pad shaft including an interface for a cranking tool; and a disconnect spring operably connected to the gearbox housing to bias the cranking pad shaft outwardly from the gearbox housing, characterised in that the gearbox comprises: an interlock pin to retain the cranking tool at the cranking pad shaft; and a spring clip disposed between the gearbox housing and the cranking pad shaft to limit axial movement of the cranking pad shaft relative to the gearbox housing, wherein the spring clip is movable into a shaft detent of the cranking pad shaft to allow axial movement of the cranking pad shaft into engagement with the drivetrain.

A turbomachine system includes a turbomachine having a turbine shaft and a gearbox operably connected to the turbine shaft. The system includes a cranking pad assembly having a cranking pad shaft rotatably secured in a gearbox housing and engageable with a gearbox drivetrain when urged inwardly into the gearbox housing. The cranking pad shaft includes an interface for a cranking tool, an interlock pin to retain the cranking tool at the cranking pad shaft, and a disconnect spring operably connected to the gearbox housing to bias the cranking pad shaft outwardly from the gearbox housing.

In another aspect the invention provides a method of rotating a turbine shaft comprising: connecting a gearbox to a turbine shaft; inserting a cranking tool into a cranking pad shaft of the gearbox; urging an interlock pin radially outwardly by the insertion of the cranking tool into the cranking pad shaft; pushing the cranking pad shaft into engagement with a drivetrain (50) of the gearbox; retaining the cranking tool at the cranking pad shaft via the interlock pin; rotating the cranking tool about a gearbox axis to rotate the turbine shaft; biasing a position of the cranking pad shaft away from the drivetrain; overcoming the bias by pushing the cranking pad shaft into engagement with the drivetrain; and limiting a travel of the cranking pad shaft along the gearbox axis via a spring clip located between the cranking pad shaft and a gearbox housing.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic of an exemplary turbomachine;
FIG. 2 is a cross-sectional view of an exemplary embodiment of a cranking pad interlock;
FIG. 3 is a cross-sectional view of an exemplary embodiment of a cranking pad interlock with a cranking tool installed;
FIG. 4 is a cross-sectional view of an exemplary embodiment of a cranking pad interlock engaging a drivetrain;
FIG. 5 is a cross-sectional view of an exemplary embodiment of a cranking pad interlock disengaging a drivetrain;
FIG. 6 is a cross-sectional view of an exemplary embodiment of a cranking pad interlock with a cranking tool withdrawing therefrom; and
FIG. 7 is a cross-sectional view of an exemplary embodiment of a cranking pad interlock with a cranking tool withdrawn.

The detailed description explains embodiments of the invention, together with advantages and features, by way of example with reference to the drawings.

### DETAILED DESCRIPTION OF THE INVENTION

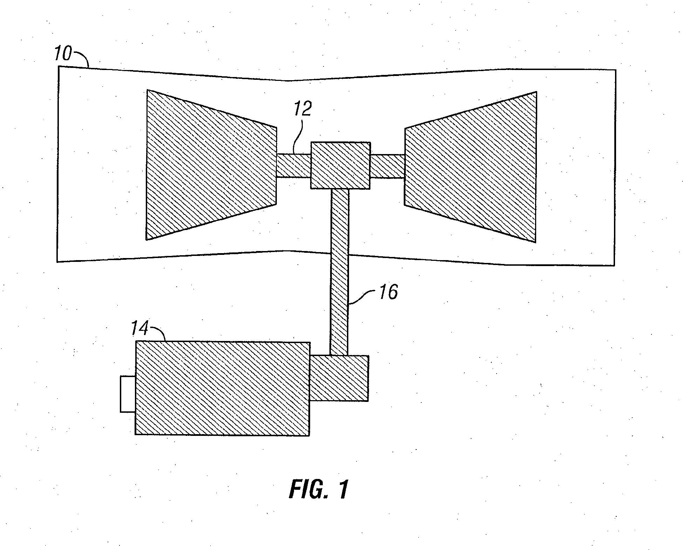

Shown in FIG. 1 is an embodiment of a turbomachine, for example, gas turbine 10, having a turbine shaft 12. The turbine shaft 12 is connected to a gearbox 14 via a transmission shaft 16 such that the turbine shaft 12 can be rotated via rotation of the transmission shaft 16.

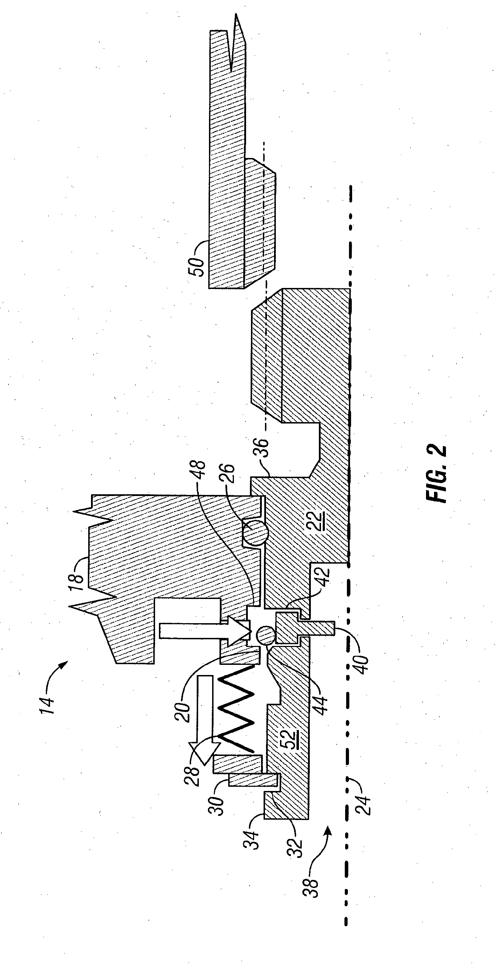

Referring now to FIG. 2, the gearbox 14 includes a gearbox housing 18 in which the components of the gearbox 14 are located. The gearbox housing 18 includes a crank pad opening 20 through which a crank pad shaft 22 extends. The crank pad shaft 22 is rotatably secured in the gearbox 14 at a gearbox axis 24 and is sealed to the gearbox housing 18 via one or more seals 26 to prevent leakage of oil or other substances from the gearbox 14 and to prevent contamination of the gearbox 14.

The crank pad shaft 22 is biased outwardly from the gearbox housing 18 by a disconnect spring 28. The disconnect spring 28 may be interactive with a disconnect clip 30 located in a clip groove 32 in an outer surface 34 of the crank pad shaft 22 to bias the crank pad shaft 22 outwardly from the gearbox housing 18. A shaft stop 36 at the crank pad shaft 22 limits an outward travel of the crank pad shaft 22 by an interference with the gearbox housing 18. The crank pad shaft 22 includes a tool cavity 38, with an interlock pin 40 extending from a shaft detent 42 in the outer surface 34 through the crank pad shaft 22 into the tool cavity 38. The tool cavity 38 may be a 3/8" square drive or other suitable configuration. A spring clip 44 is located in the shaft detent 42 radially outboard of the interlock pin 40. When the spring clip 44 is in the shaft detent 42, the spring clip 44 blocks axial travel of the crank pad shaft 22 by an interference between the crank pad shaft 22, the spring clip 44 and the gearbox housing 18. The travel is blocked even if a force great enough to overcome the spring force of the disconnect spring 28 is applied by, for example, pushing axially on the crank pad shaft 22.

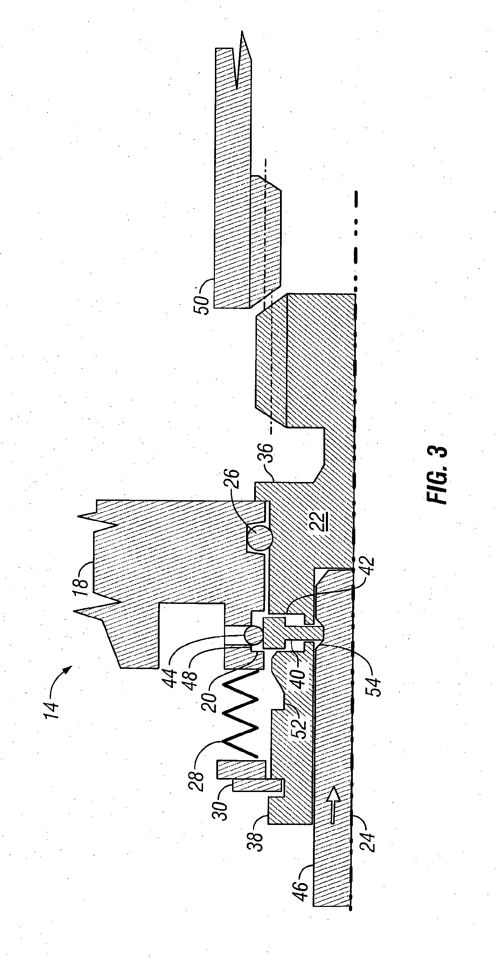

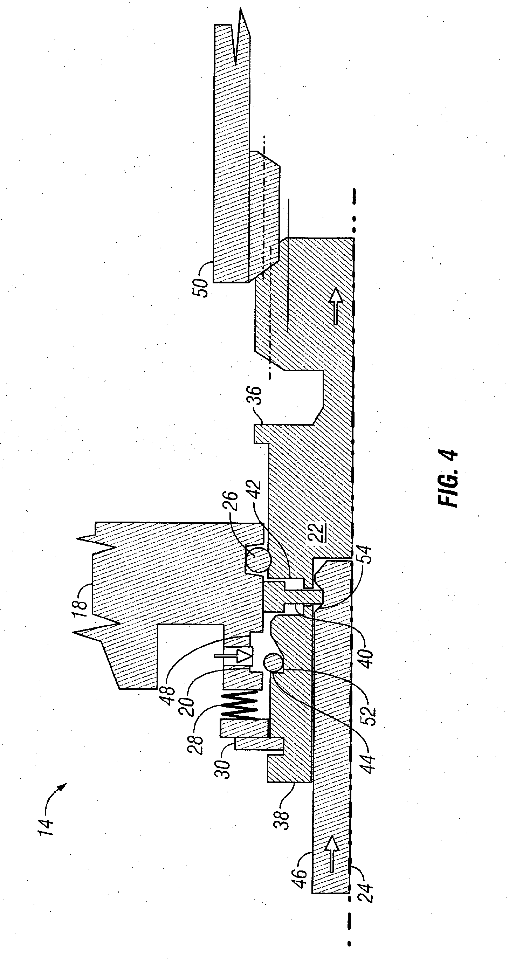

Referring to FIG. 3, the tool cavity 38 is configured so that a cranking tool 46 is insertable into the tool cavity 38. When the cranking tool 46 is inserted into the tool cavity 38, the cranking tool 46 pushes the interlock pin 40 radially outwardly which pushes the spring clip 44 out of the shaft detent 42 and into a housing cavity 48. As the cranking tool extends into the tool cavity, the interlock pin 40 follows the profile of the cranking tool and settles into a tool detent 54 which aligns the outside surface of the interlock pin 44 with the housing 18 bore and the spring clip 44 is aligned with the outer diameter of the cranking shaft 22. The cranking pad shaft 22 and the cranking tool 46 may now be pushed axially inwardly into the gearbox housing 18 by overcoming the spring force of the disconnect spring 28. As shown in FIG. 4, as the cranking pad shaft 22 moves axially inward, the cranking pad shaft 22 engages a gearbox drivetrain 50. The engagement between the cranking pad shaft 22 and the gearbox drivetrain 50 may be, for example, a spline connection. The spring clip 44 falls radially inwardly into a locking detent 52 in the cranking pad shaft 22 to again limit the axial travel of the cranking pad shaft 22 by an interference between the cranking pad shaft 22, the spring clip 44 and the gearbox housing 18. The interlock pin 40 which has extended into the tool detent 54 in the cranking tool 46 locks the cranking tool 46 in engagement with the cranking pad shaft 22. Once the cranking pad shaft 22 is engaged with the drivetrain 50, the cranking tool 46 is rotated thus rotating the cranking pad shaft 22 and the drivetrain 50. The drivetrain 50 is connected to the turbine shaft 12 via the transmission shaft 16, so rotational energy is transferred to the turbine shaft 12, rotating it.

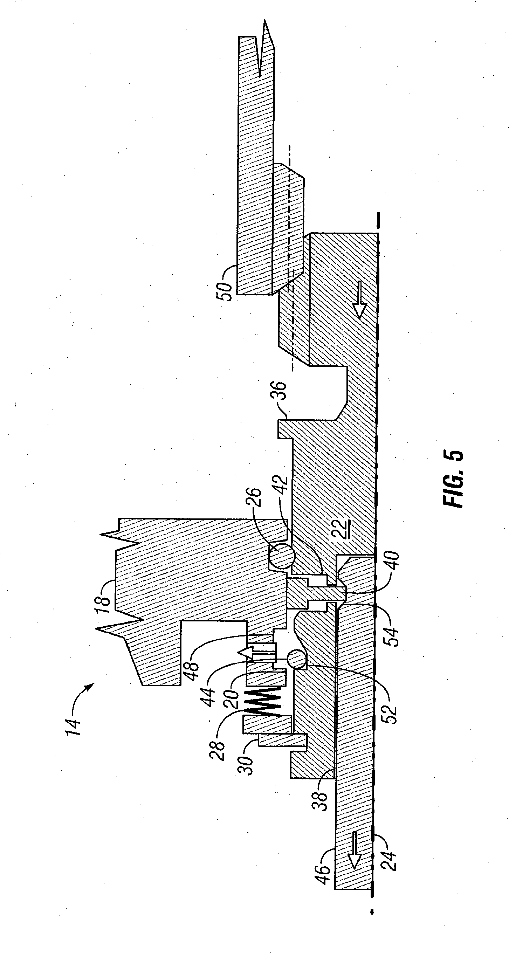

Referring to FIG. 5, to disengage the cranking pad shaft 22 from the drivetrain 50 and remove the cranking tool 46, the cranking tool 46 is pulled axially outwardly from the crankshaft housing 18. This axially outwardly movement pulls the cranking pad shaft 22 from engagement with the drivetrain 50 because the interlock pin 40 is positioned in the tool detent 54. The axial motion forces the spring clip 44 out of the locking detent 52 and into the housing cavity 48.

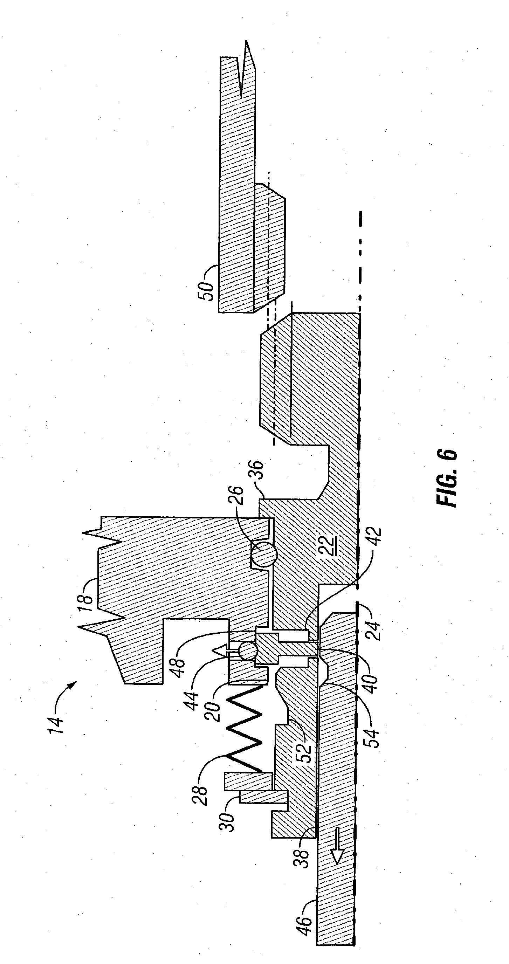

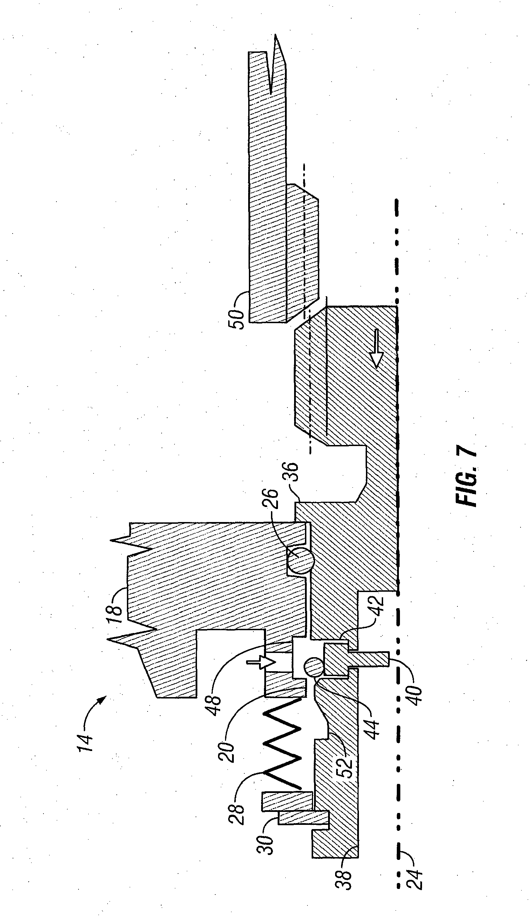

Now referring to FIG. 6, the cranking tool 46 cannot be disengaged from the cranking pad shaft 22 until the cranking pad shaft 22 has traveled sufficiently far that the interlock pin 40 can be pushed radially outward into the housing cavity 48 behind the spring clip 44. When the cranking tool 46 is withdrawn from the tool cavity as shown in FIG. 7, the spring clip 44 forces the interlock pin 40 radially inward into the shaft detent 42. Now, the axial position of the cranking pad shaft 22 is locked by the bias of the disconnect spring 28 and by the interference between the spring clip 44 and the gearbox housing 18 and cranking pad shaft 22.

Use of this cranking configuration with the interlock pin 40 and spring clip 44 ensures disengagement of the cranking pad shaft 22 from the drivetrain 50 when the cranking tool 46 is removed. Further, the gearbox housing 18 remains sealed to prevent leakage from the gearbox 14 and/or contamination of the gearbox 14 without the need for a cover of the prior art. Further, this configuration removes the human element of having to reinstall a cover after removal thereby preventing leakage and contamination leading to failure of the gearbox and/or the gas turbine.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined in the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A gearbox (14) of a turbomachine (10) comprising a gearbox housing (18), a gearbox drivetrain (50) and a cranking pad assembly, the cranking pad assembly comprising:
a cranking pad shaft (22) rotatably secured in the gearbox housing (18) and engageable with the gearbox drivetrain (50) when urged inwardly into the gearbox housing (18), the cranking pad shaft (22) including an interface (38) for a cranking tool (46); and
a disconnect spring (28) operably connected to the gearbox housing (18) to bias the cranking pad shaft (22) outwardly from the gearbox housing,
**characterised in that** the gearbox comprises:
an interlock pin (40) to retain the cranking tool (46) at the cranking pad shaft (22); and
a spring clip (44) disposed between the gearbox housing (18) and the cranking pad shaft (22) to limit axial movement of the cranking pad shaft relative to the gearbox housing, wherein the spring clip (40) is movable into a shaft detent (42) of the cranking pad shaft (22) to allow axial movement of the cranking pad shaft into engagement with the drivetrain (50).

2. The gearbox assembly of Claim 1, further comprising a seal (26) disposed between the cranking pad shaft (22) and the gearbox housing (18).

3. The gearbox assembly of Claim 1 or 2, wherein the interlock pin (40) is extendable through the cranking pad shaft (22) into the cranking tool (46) to retain the cranking tool.

4. The gearbox assembly of Claim 1, 2 or 3, wherein the interlock pin (40) is extendable into a tooling detent (54) of the cranking tool (46).

5. A turbomachine system comprising:
a turbomachine (10) including a turbine shaft (12); and
a gearbox assembly (14) as claimed in any preceding claim operably connected to the turbine shaft.

6. The turbomachine system of Claim 5, wherein rotation of the cranking pad shaft (22) when engaged with the drivetrain (50) urges rotation of the turbine shaft (12).

7. The turbomachine system of Claim 5 or 6, wherein the turbomachine (10) is a gas turbine.

8. A method of rotating a turbine shaft comprising:
connecting a gearbox (14) to a turbine shaft (12);
inserting a cranking tool (46) into a cranking pad shaft (22) of the gearbox;
urging an interlock pin (40) radially outwardly by the insertion of the cranking tool (46) into the cranking pad shaft (22);
pushing the cranking pad shaft (22) into engagement with a drivetrain (50) of the gearbox (18);
retaining the cranking tool (46) at the cranking pad shaft (22) via the interlock pin (40);
rotating the cranking tool (46) about a gearbox axis to rotate the turbine shaft (12);
biasing a position of the cranking pad shaft (22) away from the drivetrain (50); and
overcoming the bias by pushing the cranking pad shaft (22) into engagement with the drivetrain (50);
limiting a travel of the cranking pad shaft (22) along the gearbox axis via a spring clip (44) located between the cranking pad shaft (22) and a gearbox housing (18).

9. The method of Claim 8, further comprising pulling at the cranking tool (46) to disengage the cranking pad shaft (22) from the drivetrain (50).

10. The method of Claim 8 or 9, further comprising retracting the interlock pin (40) into a housing cavity of the gearbox housing (18) to allow removal of the cranking tool (46) from the cranking pad shaft (22).

## Patentansprüche

1. Getriebe (14) einer Strömungsmaschine (10), das ein Getriebegehäuse (18), einen Getriebeantrieb (50) und eine Antriebskurbelanordnung umfasst, wobei die Antriebskurbelanordnung Folgendes umfasst:
eine Antriebskurbelwelle (22), die drehbar im Getriebegehäuse (18) befestigt ist und mit dem Getriebeantrieb (50) gekoppelt werden kann, wenn sie nach innen in das Getriebegehäuse (18) gedrängt wird, wobei die Antriebskurbelwelle (22) eine Verbindungsstelle (38) für ein Kurbelwerkzeug (46) beinhaltet; und
eine Entriegelungsfeder (28), die operativ mit dem Getriebegehäuse (18) verbunden ist, um eine Antriebskurbelwelle (22) außen vom Getriebegehäuse vorzuspannen,
**dadurch gekennzeichnet, dass** das Getriebe Folgendes umfasst:
einen Verriegelungsstift (40), um das Kurbelwerkzeug (46) an der Antriebskurbelwelle (22) zu halten; und
eine Federklemme (44), die zwischen dem Getriebegehäuse (18) und der Antriebskurbelwelle (22) angeordnet ist, um axiale Bewegung der Antriebskurbelwelle im Verhältnis zum Getriebegehäuse einzuschränken, wobei die Federklemme (40) in eine Wellenarretierung (42) der Antriebskurbelwelle (22) bewegt werden kann, um eine axiale Bewegung der Antriebskurbelwelle in die Kopplung mit dem Antrieb (50) zu ermöglichen.

2. Getriebeanordnung nach Anspruch 1, die ferner eine Dichtung (26) umfasst, die zwischen der Antriebskurbelwelle (22) und dem Getriebegehäuse (18) angeordnet ist.

3. Getriebeanordnung nach Anspruch 1 oder 2, wobei der Verriegelungsstift (40) durch die Antriebskurbelwelle (22) in das Kurbelwerkzeug (46) reichen kann, um das Kurbelwerkzeug zu halten.

4. Getriebeanordnung nach Anspruch 1, 2 oder 3, wobei der Verriegelungsstift (40) in eine Werkzeugarretierung (54) des Kurbelwerkzeugs (46) reichen kann.

5. Strömungsmaschinensystem, das Folgendes umfasst:
eine Strömungsmaschine (10), die eine Turbinenwelle (12) beinhaltet; und
eine Getriebeanordnung (14) nach einem der vorangehenden Ansprüche, die operativ mit der Turbinenwelle verbunden ist.

6. Strömungsmaschinensystem nach Anspruch 5, wobei die Drehung der Antriebskurbelwelle (22), wenn sie mit dem Antrieb (50) gekoppelt ist, eine Drehung der Turbinenwelle (12) veranlasst.

7. Strömungsmaschinensystem nach Anspruch 5 oder 6, wobei die Strömungsmaschine (10) eine Gasturbine ist.

8. Verfahren zum Drehen einer Turbinenwelle, das Folgendes umfasst:
Verbinden eines Getriebes (14) mit einer Turbinenwelle (12);
Einführen eines Kurbelwerkzeugs (46) in eine Antriebskurbelwelle (22) des Getriebes;
Drängen eines Verriegelungsstifts (40) radial nach außen, durch das Einführen des Kurbelwerkzeugs (46) in die Antriebskurbelwelle (22);
Schieben der Antriebskurbelwelle (22) in Kopplung mit einem Antrieb (50) des Getriebes (18);
Halten des Kurbelwerkzeugs (46) an der Antriebskurbelwelle (22) durch den Verriegelungsstift (40);
Drehen des Kurbelwerkzeugs (46) um eine Getriebeachse, um die Turbinenwelle (12) zu drehen;
Vorspannen einer Position der Antriebskurbelwelle (22) weg vom Antrieb (50); und
Überwinden der Vorspannung durch Schieben der Antriebskurbelwelle (22) in Kopplung mit dem Antrieb (50);
Einschränken eines Hubs der Antriebskurbelwelle (22) entlang der Getriebeachse durch eine Federklemme (44), die zwischen der Antriebskurbelwelle (22) und einem Getriebegehäuse (18) angeordnet ist.

9. Verfahren nach Anspruch 8, das ferner das Ziehen am Kurbelwerkzeug (46) umfasst, um die Antriebskurbelwelle (22) vom Antrieb (50) zu trennen.

10. Verfahren nach Anspruch 8 oder 9, das ferner das Zurückziehen des Verriegelungsstifts (40) in eine Gehäuseaushöhlung des Getriebegehäuses (18) umfasst, um das Entfernen des Kurbelwerkzeugs (46) von der Antriebskurbelwelle (22) zu ermöglichen.

## Revendications

1. Boîte (14) de vitesses d'une turbomachine (10) comprenant un carter (18) de transmission, une chaîne (50) de transmission de boîte de vitesses et un ensemble manivelle d'entraînement, l'ensemble manivelle d'entraînement comprenant :
une tige (22) de manivelle d'entraînement fixée en rotation dans le carter (18) de transmission et pouvant entrer en prise avec la chaîne (50) de transmission de la boîte de vitesses lorsqu'elle est pressée vers l'intérieur dans le carter (18) de transmission, la tige (22) de manivelle d'entraînement incluant une interface (38) pour un outil (46) de manivelle ; et
un ressort de coupure (28) relié de façon fonctionnelle au carter (18) de transmission pour solliciter la tige (22) de manivelle d'entraînement l'éloignant du carter de transmission,
**caractérisée en ce que** la boîte de vitesses comprend :
une broche (40) de verrouillage pour retenir l'outil (46) de manivelle sur la tige (22) de manivelle d'entrainement ; et
une pince (44) à ressort disposée entre le carter (18) de transmission et la tige (22) de manivelle d'entraînement pour limiter le déplacement axial de la tige de manivelle d'entraînement par rapport au carter de transmission, la pince (40) à ressort étant mobile dans un cran (42) de tige de la tige (22) de manivelle d'entraînement pour permettre le déplacement axial de la tige de manivelle d'entraînement en prise avec la chaîne (50) d'entraînement.

2. Ensemble boîte de vitesses selon la revendication 1, comprenant en outre un joint (26) d'étanchéité disposé entre la tige (22) de manivelle d'entraînement et le carter (18) de transmission.

3. Ensemble boîte de vitesses selon la revendication 1 ou 2, dans lequel la broche (40) de verrouillage peut s'étendre dans l'outil (46) de manivelle en traversant la tige (22) de manivelle d'entraînement pour retenir l'outil de manivelle.

4. Ensemble boîte de vitesses selon la revendication 1, 2 ou 3, dans lequel la goupille (40) de verrouillage peut s'étendre dans un cran (54) d'outillage de l'outil (46) de manivelle.

5. Système de turbomachine comprenant :
une turbomachine (10) comprenant une tige (12) de turbine ; et
un ensemble boîte (14) de vitesses selon l'une quelconque des revendications précédentes relié de manière fonctionnelle à la tige de turbine.

6. Système de turbomachine selon la revendication 5, dans lequel la rotation de la tige (22) de manivelle d'entraînement provoque la rotation de la tige (12) de turbine lorsqu'elle est en prise avec la chaîne (50) de transmission.

7. Système de turbomachine selon la revendication 5 ou 6, dans lequel la turbomachine (10) est une turbine à gaz.

8. Procédé de rotation d'une tige de turbine comprenant :
la connexion d'une boîte (14) de vitesses à une tige (12) de turbine ;
l'insertion d'un outil (46) de manivelle dans une tige (22) de manivelle d'entraînement de la boîte de vitesses ;
la pression d'une goupille (40) de verrouillage radialement vers l'extérieur par l'insertion de l'outil (46) de manivelle dans la tige (22) de manivelle d'entraînement ;
la poussée de la tige (22) de manivelle d'entraînement entrant en prise avec une chaîne (50) de transmission de la boîte (18) de vitesses ;
la retenue de l'outil (46) de manivelle sur la tige (22) de manivelle d'entraînement à l'aide de la goupille (40) de verrouillage ;
la rotation de l'outil (46) de manivelle autour d'un axe de la boîte de vitesses pour faire tourner la tige (12) de turbine ;
biaiser une position de la tige (22) de manivelle d'entraînement en l'éloignant de la chaîne (50) de transmission ;
le fait de surmonter le biais en poussant la tige (22) de manivelle d'entraînement en prise avec la chaîne (50) de transmission ;
la limitation d'une course de la tige (22) de manivelle d'entraînement le long de l'axe de la boîte de vitesses via une pince (44) à ressort située entre la tige (22) de manivelle d'entraînement et un carter (18) de transmission.

9. Procédé selon la revendication 8, comprenant en outre une traction exercée sur l'outil (46) de manivelle pour dégager la tige (22) de manivelle d'entraînement de la chaîne (50) de transmission.

10. Procédé selon la revendication 8 ou 9, comprenant en outre la rétractation de la goupille (40) de verrouillage dans une cavité du carter (18) de transmission pour permettre le retrait de l'outil (46) de manivelle de la tige (22) de manivelle d'entraînement.
